(19)

**Europäisches Patentamt**

**European Patent Office**

**Office européen des brevets**

(11) **EP 4 231 212 A1**

(12) **EUROPEAN PATENT APPLICATION**

(43) Date of publication:
**23.08.2023 Bulletin 2023/34**

(21) Application number: **23157763.6**

(22) Date of filing: **21.02.2023**

(51) International Patent Classification (IPC):
***G06Q 10/04*** *(2023.01)* ***G06Q 10/087*** *(2023.01)*

(52) Cooperative Patent Classification (CPC):
**G06Q 10/087; G06Q 10/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.02.2022 IN 202221009133**

(71) Applicant: **Jio Platforms Limited**
**Gujarat 380006 (IN)**

(72) Inventors:
• **JOSHI,, Prasad Pradip**
**421204 Dombivli (IN)**
• **SINGH,, Rohit**
**560102 Bangalore (IN)**
• **BARJATIYA,, Pratik**
**413002 Solapur (IN)**

(74) Representative: **Potter Clarkson**
**Chapel Quarter**
**Mount Street**
**Nottingham NG1 6HQ (GB)**

(54) **SYSTEM AND METHOD FOR CONSUMPTION ESTIMATION AMONG USERS**

(57)     The present disclosure provides a system and a method for enabling an entity to implement a re-order/consumption rate associated with a product for each vendor/customer and generates a quantity optimization for loss reduction. The product may include perishable consumables utilized by users. The system utilizes clustering of data obtained from customer and merchants. Further, the system implements statistical models to estimate consumption rate of each product, affinity towards products,

EP 4 231 212 A1

## Description

A portion of the disclosure of this patent document contains material, which is subject to intellectual property rights such as but are not limited to, copyright, design, trademark, integrated circuit (IC) layout design, and/or trade dress protection, belonging to Jio Platforms Limited (JPL) or its affiliates (hereinafter referred as owner). The owner has no objection to the facsimile reproduction by anyone of the patent document or the patent disclosure, as it appears in the Patent and Trademark Office patent files or records, but otherwise reserves all rights whatsoever. All rights to such intellectual property are fully reserved by the owner.

## FIELD OF INVENTION

The embodiments of the present disclosure generally relate to systems and methods for various estimations in an ecommerce platform. More particularly, the present disclosure relates to a system and a method for consumption estimation among a variety of users that helps in minimizing loss, wastage of products, and provides recommendations for refilling general inventory.

## BACKGROUND OF INVENTION

The following description of the related art is intended to provide background information pertaining to the field of the disclosure. This section may include certain aspects of the art that may be related to various features of the present disclosure. However, it should be appreciated that this section is used only to enhance the understanding of the reader with respect to the present disclosure, and not as admissions of the prior art.

Consumption patterns across grocery and other consumable products/ items may be studied using statistical models for estimating consumption rate for each product and specific vendor /customer. Consumption patterns are directly correlated with a product order, hence are directed towards enabling customers to purchase more products for generation of high revenues in an ecommerce platform.

Existing systems however cannot estimate the re-order or consumption rate of each product for each vendor/customer and a quantity optimization for loss reduction. The vendor/customer cannot predict the most optimal number of products for each category to minimize their loss and wastage of products. Further, the existing systems involve estimation over order data and product catalogue data using multiple distribution functions like Normal, Poisson, log-normal etc. However, this approach is inefficient as input data is sparse and mostly consists of outlier data.

There is, therefore, a need in the art to provide a system and a method that can mitigate the problems associated with the prior arts.

## OBJECTS OF THE INVENTION

Some of the objects of the present disclosure, which at least one embodiment herein satisfies are listed herein below.

It is an object of the present disclosure to provide a system and a method for estimating the re-order/consumption rate of each product for each vendor/customer and generate a quantity optimization for loss reduction.

It is an object of the present disclosure to provide a system and a method for prescribing the vendor/customer to purchase optimal number of products for each category to minimize loss and wastage of products.

It is an object of the present disclosure to provide a system and a method for estimating a Look-Ahead-Opportunity (difference of actual quantity and expected quantity at any day for a product) for each vendor/customer.

It is an object of the present disclosure to provide a system and a method for providing recommendations to vendors/customers for refilling general inventory.

It is an object of the present disclosure to provide a system and a method for estimating over order data using segmentation based approach.

It is an object of the present disclosure to provide a system and a method for recommending re-order/ consumption rate based on a product reorder rate, product affinity, and a product popularity score.

## SUMMARY

This section is provided to introduce certain objects and aspects of the present disclosure in a simplified form that are further described below in the detailed description. This summary is not intended to identify the key features or the scope of the claimed subject matter.

In an aspect, the present disclosure relates to a system for consumption estimation. The system may include a processor and a memory coupled to the processor. The memory may include processor-executable instructions to be executed by the processor. The processor may receive one or more product data from one or more computing devices. The one or more computing devices may be operated by one or more users and may be connected to the processor via a network. The processor may compute an aggregated product consumption data based on the received one or more product data. The processor may compute a reorder estimation and an optimal quantity estimation for the received one or more product data based on the computed aggregated product consumption data. The processor may recommend, using an artificial intelligence (AI) engine, a product stock out data to the one or more users based on the reorder estimation and the optimal quantity estimation. The processor may generate the consumption estimation for the one or more users based on the recommendation.

In an embodiment, the aggregated product consumption data may include at least one of a product shelf life data, a user segmentation data, a user brand affinity data, and a product popularity data.

In an embodiment, the one or more product data may include at least one of a user order data, and a product catalog data.

In an embodiment, the processor may be configured to generate the user segmentation data based on a computation of one or more user clusters and an associated user reorder rate from the received one or more product data.

In an embodiment, the processor may be configured to utilize the received one or more product data and an associated attribute input to compute the product popularity data.

In an embodiment, the associated attribute input may include at least one of a user address, an ordered quantity, a category level, and a popularity attribute.

In an embodiment, the processor may be configured to generate the user brand affinity data based on a computation of a frequency based logic of one or more parameters.

In an embodiment, the one or more parameters may include at least one of a user, a brand, and a category associated with the received one or more product data.

In an embodiment, the processor may be configured to generate the product shelf life data based on a transaction probability function associated with the received one or more product data.

In an embodiment, the processor may be configured to generate a look ahead reorder based on the user segmentation data and the user brand affinity data.

In another aspect, the present disclosure relates to a method for consumption estimation. The method may include receiving, by a processor, one or more product data from one or more computing devices. The one or more computing devices may be operated by one or more users and may be connected to the processor via a network. The method may include computing, by the processor, an aggregated product consumption data based on the received one or more product data. The method may include computing, by the processor, a reorder estimation and an optimal quantity estimation for the received one or more product data based on the computed aggregated product consumption data. The method may include recommending, by the processor using an AI engine, a product stock out data to the one or more users based on the reorder estimation and the optimal quantity estimation. The method may include generating, by the processor, the consumption estimation for the one or more users based on the recommendation.

In an embodiment, the aggregated product consumption data may include at least one of a product shelf life data, a user segmentation data, a user brand affinity data, and a product popularity data.

In an embodiment, the one or more product data may include at least one of a user order data, and a product catalog data.

In an embodiment, the method may include generating, by the processor, the user segmentation data based on computing, by the processor, one or more user clusters and an associated user reorder rate from the received one or more product data.

In an embodiment, the method may include utilizing, by the processor, the received one or more product data and an associated attribute input to compute the product popularity data.

In an embodiment, the associated attribute input may include at least one of a user address, an ordered quantity, a category level, and a popularity attribute.

In an embodiment, the method may include generating, by the processor, the user brand affinity data based on computing a frequency based logic of one or more parameters.

In an embodiment, the one or more parameters may include at least one of a user, a brand, and a category associated with the received one or more product data.

In an embodiment, the method may include generating, by the processor, the product shelf life data based on a transaction probability function associated with the received one or more product data.

In an embodiment, the method may include generating, by the processor, a look ahead reorder based on the user segmentation data and the user brand affinity data.

In another aspect, the present disclosure relates to a user equipment (UE) for consumption estimation. The UE may include one or more processors communicatively coupled to a processor of a system. The one or more processors may be coupled to a memory that stores instructions to be executed by the one or more processors or the UE. The UE may transmit one or more product data to the processor via a network. One or more users may operate the UE. The processor may be configured to receive the one or more product data from the UE. The processor may compute an aggregated product consumption data based on the received one or more product data. The processor may compute a reorder estimation and an optimal quantity estimation for the received one or more product data based on the computed aggregated product consumption data. The processor may recommend, using an AI engine, a product stock out data to the one or more users based on the reorder estimation and the optimal quantity estimation. The processor may generate the consumption estimation for the one or more users based on the recommendation.

The following numbered paragraphs are also disclosed:

1. A system (110) for consumption estimation, the system (110) comprising:

a processor (202); and
a memory (204) coupled to the processor (202), wherein the memory (204) comprises processor-executable instructions, which on execution, cause the processor (202) to:

receive one or more product data (102) from one or more computing devices (104), wherein the one or more computing devices (104) are operated by one or more users (108) and are connected to the processor (202) via a network (106);
compute an aggregated product consumption data based on the received one or more product data (102);
compute a reorder estimation and an optimal quantity estimation for the received one or more product data (102) based on the computed aggregated product consumption data;
recommend, using an artificial intelligence (AI) engine (112), a product stock out data to the one or more users (108) based on the reorder estimation and the optimal quantity estimation; and
generate the consumption estimation for the one or more users (108) based on the recommendation.

2. The system (110) as claimed in paragraph 1, wherein the aggregated product consumption data comprises at least one of: a product shelf life data, a user segmentation data, a user brand affinity data, and a product popularity data.

3. The system (110) as claimed in paragraph 1, wherein the one or more product data (102) comprises at least one of: a user order data, and a product catalog data.

4. The system (110) as claimed in paragraph 2, wherein the processor (202) is configured to generate the user segmentation data based on a computation of one or more user clusters and an associated user reorder rate from the received one or more product data (102).

5. The system (110) as claimed in paragraph 2, wherein the processor (202) is configured to utilize the received one or more product data (102) and an associated attribute input to compute the product popularity data.

6. The system (110) as claimed in paragraph 5, wherein the associated attribute input comprises at least one of: a user address, an ordered quantity, a category level, and a popularity attribute.

7. The system (110) as claimed in paragraph 2, wherein the processor (202) is configured to generate the user brand affinity data based on a computation of a frequency based logic of one or more parameters.

8. The system (110) as claimed in paragraph 7, wherein the one or more parameters comprise at least one of: a user, a brand, and a category associated with the received one or more product data (102).

9. The system (110) as claimed in paragraph 2, wherein the processor (202) is configured to generate the product shelf life data based on a transaction probability function associated with the received one or more product data (102).

10. The system (110) as claimed in paragraph 2, wherein the processor (202) is configured to generate a look ahead reorder based on the user segmentation data and the user brand affinity data.

11. A method for consumption estimation, the method comprising:

receiving, by a processor (202), one or more product data (102) from one or more computing devices (104), wherein the one or more computing devices (104) are operated by one or more users (108) and are connected to the processor (202) via a network (106);
computing by the processor (202), an aggregated product consumption data based on the received one or more product data (102);
computing by the processor (202), a reorder estimation and an optimal quantity estimation for the received one or more product data (102) based on the computed aggregated product consumption data;
recommending, by the processor (202), using an artificial intelligence (AI) engine (112), a product stock out data to the one or more users (108) based on the reorder estimation and the optimal quantity estimation; and
generating, by the processor (220), the consumption estimation for the one or more users (108) based on the recommendation.

12. The method as claimed in paragraph 11, wherein the aggregated product consumption data comprises at least one of: a product shelf life data, a user segmentation data, a user brand affinity data, and a product popularity data.

13. The method as claimed in paragraph 11, wherein the one or more product data (102) comprises at least one of: a user order data, and a product catalog data.

14. The method as claimed in paragraph 12, comprising generating, by the processor (202), the user segmentation data based on computing, by the processor (202), one or more user clusters and an associated user reorder rate from the received one or more product data (102).

15. The method as claimed in paragraph 12, comprising utilizing, by the processor (202), the received one or more product data (102) and an associated attribute input to compute the product popularity data.

16. The method as claimed in paragraph 15, wherein the associated attribute input comprises at least one of: a user address, an ordered quantity, a category level, and a popularity attribute.

17. The method as claimed in paragraph 12, comprising generating, by the processor (202), the user brand affinity data based on computing a frequency based logic of one or more parameters.

18. The method as claimed in paragraph 17, wherein the one or more parameters comprises at least one of: a user, a brand, and a category associated with the received one or more product data (102).

19. The method as claimed in paragraph 12, comprising generating, by the processor (202), the product shelf life data based on a transaction probability function associated with the received one or more product data (102).

20. The method as claimed in paragraph 12, comprising generating, by the processor (202), a look ahead reorder based on the user segmentation data and the user brand affinity data.

21. A user equipment (UE) (104) for consumption estimation, the UE (104) comprising:

one or more processors communicatively coupled to a processor (202) of a system (110), wherein the one or more processors are coupled to a memory, and wherein said memory stores instructions which when executed by the one or more processors cause the UE (104) to:
transmit one or more product data (102) to the processor (202) via a network (106), wherein one or more users (108) operate the UE (104),
wherein the processor (202) is configured to:

receive the one or more product data (102) from the UE (104);
compute an aggregated product consumption data based on the received one or more product data (102);
compute a reorder estimation and an optimal quantity estimation for the received one or more product data (102) based on the computed aggregated product consumption data;
recommend, using an artificial intelligence (AI) engine (112), a product stock out data to the one or more users (108) based on the reorder estimation and the optimal quantity estimation; and
generate the consumption estimation for the one or more users (108) based on the recommendation.

## BRIEF DESCRIPTION OF DRAWINGS

The accompanying drawings, which are incorporated herein, and constitute a part of this disclosure, illustrate exemplary embodiments of the disclosed methods and systems which like reference numerals refer to the same parts throughout the different drawings. Components in the drawings are not necessarily to scale, emphasis instead being placed upon clearly illustrating the principles of the present disclosure. Some drawings may indicate the components using block diagrams and may not represent the internal circuitry of each component. It will be appreciated by those skilled in the art that disclosure of such drawings includes the disclosure of electrical components, electronic components, or circuitry commonly used to implement such components.

FIG. 1 illustrates an exemplary network architecture (100) of a proposed system (110), in accordance with an embodiment of the present disclosure.

FIG. 2 illustrates an exemplary block diagram (200) of a proposed system (110), in accordance with an embodiment of the present disclosure.

FIG. 3 illustrates an exemplary representation (300) of the proposed system architecture, in accordance with an embodiment of the present disclosure.

FIGs. 4A-4B illustrate exemplary system sub module (400-420) representations, in accordance with embodiments of the present disclosure.

FIGs. 5A-5E illustrate exemplary representation of a result analysis, in accordance with embodiments of the present disclosure.

FIG. 6 illustrates an exemplary computer system (600) in which or with which embodiments of the present disclosure may be implemented.

The foregoing shall be more apparent from the following more detailed description of the disclosure.

## BRIEF DESCRIPTION OF THE INVENTION

In the following description, for the purposes of explanation, various specific details are set forth in order to provide a thorough understanding of embodiments of the present disclosure. It will be apparent, however, that embodiments of the present disclosure may be practiced without these specific details. Several features described hereafter can each be used independently of one another or with any combination of other features. An individual feature may not address all of the problems discussed above or might address only some of the problems discussed above. Some of the problems discussed above might not be fully addressed by any of the features described herein.

The ensuing description provides exemplary embodiments only and is not intended to limit the scope, applicability, or configuration of the disclosure. Rather, the ensuing description of the exemplary embodiments will provide those skilled in the art with an enabling description for implementing an exemplary embodiment. It should be understood that various changes may be made in the function and arrangement of elements without departing from the spirit and scope of the disclosure as set forth.

Specific details are given in the following description to provide a thorough understanding of the embodiments. However, it will be understood by one of ordinary skill in the art that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail to avoid obscuring the embodiments.

Also, it is noted that individual embodiments may be described as a process that is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process is terminated when its operations are completed but could have additional steps not included in a figure. A process may correspond to a method, a function, a procedure, a subroutine, a subprogram, etc. When a process corresponds to a function, its termination can correspond to a return of the function to the calling function or the main function.

The word "exemplary" and/or "demonstrative" is used herein to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent exemplary structures and techniques known to those of ordinary skill in the art. Furthermore, to the extent that the terms "includes," "has," "contains," and other similar words are used in either the detailed description or the claims, such terms are intended to be inclusive in a manner similar to the term "comprising" as an open transition word without precluding any additional or other elements.

Reference throughout this specification to "one embodiment" or "an embodiment" or "an instance" or "one instance" means that a particular feature, structure, or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The terminology used herein is for the purpose of describing particular embodiments only and is not intended to be limiting of the disclosure. As used herein, the singular forms "a", "an", and "the" are intended to include the plural forms as well, unless the context indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

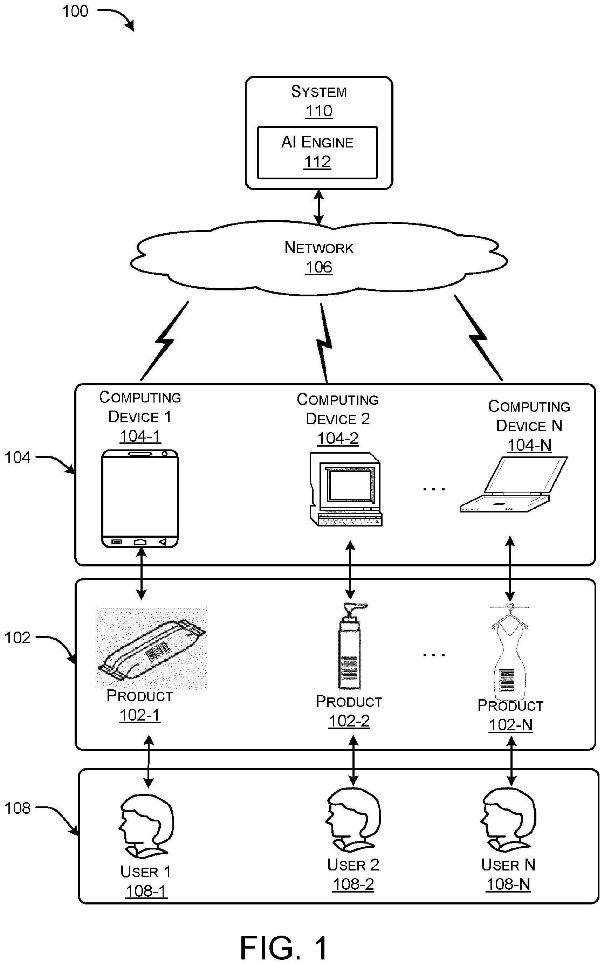

The various embodiments throughout the disclosure will be explained in more detail with reference to FIGs. 1-6.

FIG. 1 illustrates an exemplary network architecture (100) of a proposed system (110), in accordance with an embodiment of the present disclosure.

As illustrated in FIG. 1, the system (110) may be connected to one or more computing devices (104-1, 104-2... 104-N) via a network (106). The one or more computing devices (104-1, 104-2... 104-N) may be interchangeably referred as a user equipment (UE) (104) and be operated by one or more users (108-1, 108-2.108-N). Further, the one or more users (108-1, 108-2... 108-N) may be interchangeably referred as a user (108) or users (108). The users (108) may provide one or more product data (102-1, 102-2... 102-N) to the system (110). The one or more product data (102-1, 102-2... 102-N) may also be interchangeably referred as product data (102). The system (110) may include an artificial intelligence (AI) engine (112) for recommending a product stock out data to the one or more users (108) based on a reorder estimation and an optimal quantity estimation associated with the one or more product data (102).

The computing devices (104) may include, but not be limited to, a mobile, a laptop, etc. Further, the computing devices (104) may include a smartphone, virtual reality (VR) devices, augmented reality (AR) devices, a general-purpose computer, desktop, personal digital assistant, tablet computer, and a mainframe computer. Additionally, input devices for receiving input from a user (108) such as a touch pad, touch-enabled screen, electronic pen, and the like may be used. A person of ordinary skill in the art will appreciate that the computing devices (104) may not be restricted to the mentioned devices and various other devices may be used.

The network (106) may include, by way of example but not limitation, at least a portion of one or more networks having one or more nodes that transmit, receive, forward, generate, buffer, store, route, switch, process, or a combination thereof, etc. one or more messages, packets, signals, waves, voltage or current levels, some combination thereof, or so forth. The network (106) may also include, by way of example but not limitation, one or more of a wireless network, a wired network, an internet, an intranet, a public network, a private network, a packet-switched network, a circuit-switched network, an ad hoc network, an infrastructure network, a Public-Switched Telephone Network (PSTN), a cable network, a cellular network, a satellite network, a fiber optic network, or some combination thereof.

In an embodiment, the system (110) may compute an aggregated product consumption data, based on the received one or more product data (102). Further, the system (110) may compute a reorder estimation and an optimal quantity estimation for the received one or more product data (102), based on the computed aggregated product consumption data.

In an exemplary embodiment, the one or more product data (102) may include perishable consumables utilized by the users (108). Perishable consumables may include but not limited to dairy products, vegetables, meat, and baked goods.

In an embodiment, the system (110) may recommend, using the AI engine (112), a product stock out data to the one or more users (108) based on the reorder estimation and the optimal quantity estimation.

In an embodiment, the system (110) may generate the consumption estimation for the one or more users (108) based on the recommendation generated by the AI engine (112), i.e., reorder estimation and the optimal quantity estimation.

Although FIG. 1 shows exemplary components of the network architecture (100), in other embodiments, the network architecture (100) may include fewer components, different components, differently arranged components, or additional functional components than depicted in FIG. 1. Additionally, or alternatively, one or more components of the network architecture (100) may perform functions described as being performed by one or more other components of the network architecture (100).

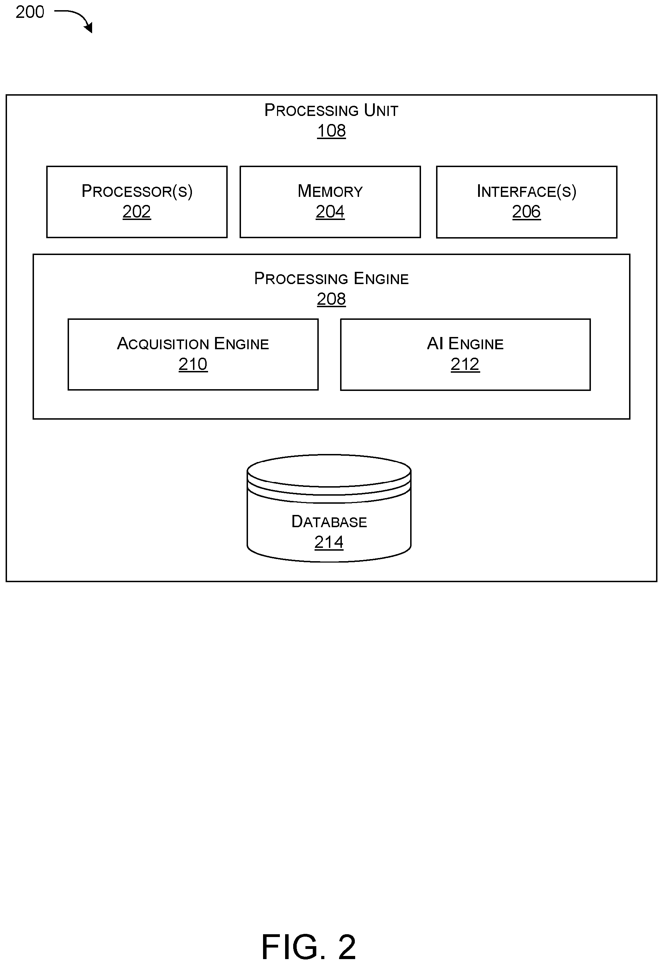

FIG. 2 illustrates an exemplary block diagram (200) of a proposed system (110), in accordance with an embodiment of the present disclosure.

Referring to FIG. 2, the system (110) may comprise a processor (202) or one or more processor(s) (202) that may be implemented as one or more microprocessors, microcomputers, microcontrollers, digital signal processors, central processing units, logic circuitries, and/or any devices that process data based on operational instructions. Among other capabilities, the processor (202) may be configured to fetch and execute computer-readable instructions stored in a memory (204) of the system (110). The memory (204) may be configured to store one or more computer-readable instructions or routines in a non-transitory computer readable storage medium, which may be fetched and executed to create or share data packets over a network service. The memory (204) may comprise any non-transitory storage device including, for example, volatile memory such as random-access memory (RAM), or non-volatile memory such as erasable programmable read only memory (EPROM), flash memory, and the like.

In an embodiment, the system (110) may include an interface(s) (206). The interface(s) (206) may comprise a variety of interfaces, for example, interfaces for data input and output (I/O) devices, storage devices, and the like. The interface(s) (206) may also provide a communication pathway for one or more components of the system (110). Examples of such components include, but are not limited to, processing engine(s) (208), an acquisition engine (210), an artificial intelligence (AI) engine (212), and a database (214). An ordinary person skilled in the art may understand that the artificial intelligence (AI) engine (210) of FIG. 2 may be similar to the AI engine (112) of FIG. 1 in its functionality.

The processing engine(s) (208) may be implemented as a combination of hardware and programming (for example, programmable instructions) to implement one or more functionalities of the processing engine(s) (208). In examples described herein, such combinations of hardware and programming may be implemented in several different ways. For example, the programming for the processing engine(s) (208) may be processor-executable instructions stored on a non-transitory machine-readable storage medium and the hardware for the processing engine(s) (208) may comprise a processing resource (for example, one or more processors), to execute such instructions. In the present examples, the machine-readable storage medium may store instructions that, when executed by the processing resource, implement the processing engine(s) (208). In such examples, the system (110) may comprise the machine-readable storage medium storing the instructions and the processing resource to execute the instructions, or the machine-readable storage medium may be separate but accessible to the system (110) and the processing resource. In other examples, the processing engine(s) (208) may be implemented by electronic circuitry.

In an embodiment, the processor (202) may receive one or more product data from one or more computing devices (104) via an acquisition engine (210). The processor (202) may store the one or more product data in the database (214). The processor (202) may compute an aggregated product consumption data, based on the received one or more product data. The aggregated product consumption data may include, but not be limited to, a product shelf life data, a user segmentation data, a user brand affinity data, and a product popularity data.

In an embodiment, the processor (202) may compute a reorder estimation and an optimal quantity estimation for the received one or more product data (102), based on the computed aggregated product consumption data. The one or more product data (102) may include, but not be limited to, a user order data, and a product catalog data.

In an embodiment, the processor (202) may recommend, using the AI engine (212), a product stock out data to the one or more users (108) based on the reorder estimation and the optimal quantity estimation. The processor (202) may generate the consumption estimation for the one or more users (108) based on the reorder estimation and the optimal quantity estimation, and as such, the recommendation.

In an embodiment, the processor (202) may be configured to generate the user segmentation data based on the computation of one or more user clusters and an associated user reorder rate from the received one or more product data (102).

In an embodiment, the processor (202) may be configured to utilize the received one or more product data (102) and an associated attribute input to compute the product popularity data. The associated attribute input may comprise at least one of a user address, an ordered quantity, a category level, and a popularity attribute.

In an embodiment, the processor (202) may be configured to generate the user brand affinity data via the computation of a frequency based logic of one or more parameters. The one or more parameters may comprise at least one of a user, a brand, and a category associated with the received one or more product data (102).

In an embodiment, the processor (202) may be configured to generate the product shelf life data based on a transaction probability function associated with the received one or more product data (102).

In an embodiment, the processor (202) may be configured to generate a look ahead reorder based on the user segmentation data and the user brand affinity data.

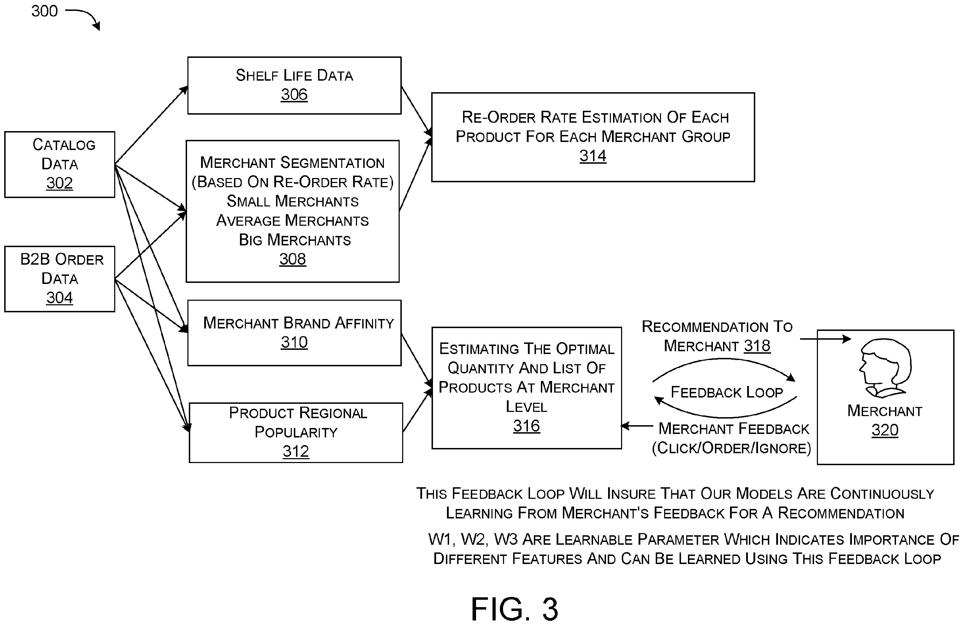

FIG. 3 illustrates an exemplary representation (300) of the proposed system architecture, in accordance with an embodiment of the present disclosure. A person ordinary skilled in the art may understand that terms merchant and vendor may be interchangeably used throughout the disclosure.

As illustrated in FIG. 3, the system architecture may include a catalog data module (302), a B2B order data module (304), a shelf life data module (306), merchant segmentation module (308), a merchant brand affinity module (310), and a product regional popularity module (312). The catalog data module (302) may provide inputs to the shelf life data module (306), the merchant segmentation module (308), the merchant brand affinity module (310), and the product regional popularity module (312). Further, the B2B order data module (304) may provide inputs to the merchant segmentation module (308), the merchant brand affinity module (310), and the product regional popularity module (312). The shelf life data module (306), the merchant segmentation module (308) may utilize the inputs provided by the catalog data module (302), the B2B order data module (304), and generate the re-order rate estimation of each product for each merchant group (314). The merchant brand affinity module (310), and the product regional popularity module (312) may receive inputs from the B2B order data module (304) and aid in estimating the optimal quantity and list of products at merchant level (316). Hence, a recommendation may be provided to a merchant/vendor (320). Additionally, feedback (318) from the merchant/vendor (320) may utilized by the AI engine (212) for learning and updating various models utilized for generating future recommendations to the merchant (320). w1, w2, w3 may be learnable parameters that indicate importance of various features that may be learnt by the AI engine (212) using a feedback loop for providing future recommendations to the merchant (320).

Hence results from various modules may be utilized to obtain the following:

- Re-order rate model for all articles/products (article capacitance)
- Selecting most frequent products bought by that merchant (merchant's affinity)
- Pin-code wise product popularity for each category. (pin-code popularity)

Hence, the final product recommendation may be weighted union of all of the above three results and given by:

$$\text{Recommended Products} = w1*(\text{article capacitance score}) + w2*$$
$$(\text{merchant's affinity score}) + w3*(\text{pin-code product popularity score})$$

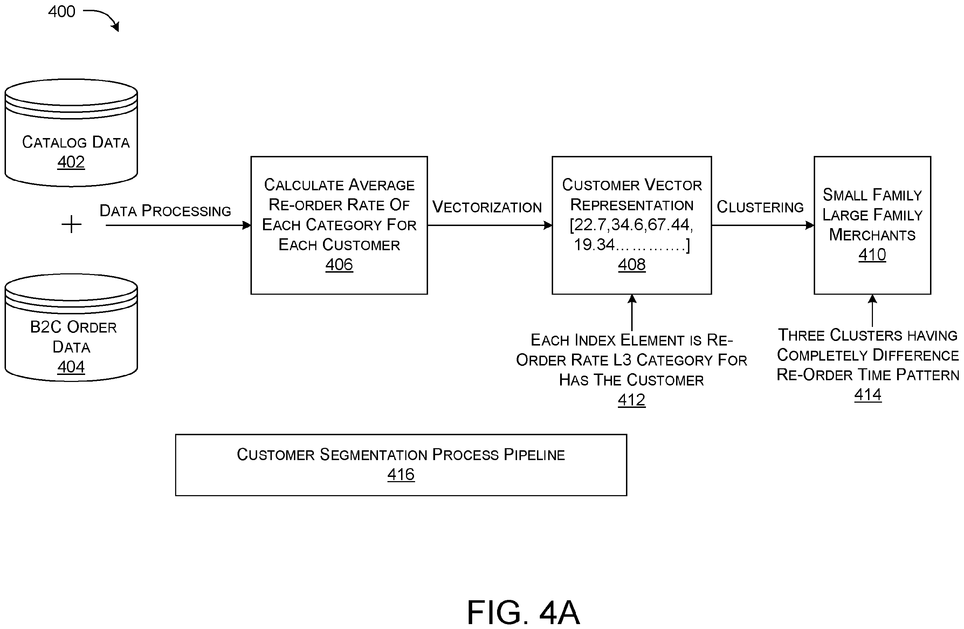

FIGs. 4A-4B illustrate exemplary system sub module (400-420) representations, in accordance with an embodiment of the present disclosure. A person ordinary skilled in the art may understand that the term customer may be interchangeably mentioned as the users (108) throughout the disclosure as illustrated in FIG. 1.

FIG. 4A highlights a customer segmentation pipeline (416) in accordance with an embodiment of the present disclosure. As illustrated, the customer segmentation pipeline (416) may receive data from a catalog data module (402) and a B2C order data module (404). The data may be pre-processed to calculate the average reorder rate of each category for each customer (406). The average reorder rate of each category for each customer (406) may be vectorised to obtain a customer vector representation (408) where each index element may be a reorder rate for the customer (412). Further, based on a clustering of the customer vector representation (408), one or more clusters (410) having a completely different reorder time pattern (414) may be obtained. As an example, three clusters specifying a small family, a large family, and merchants may be generated through the clustering process.

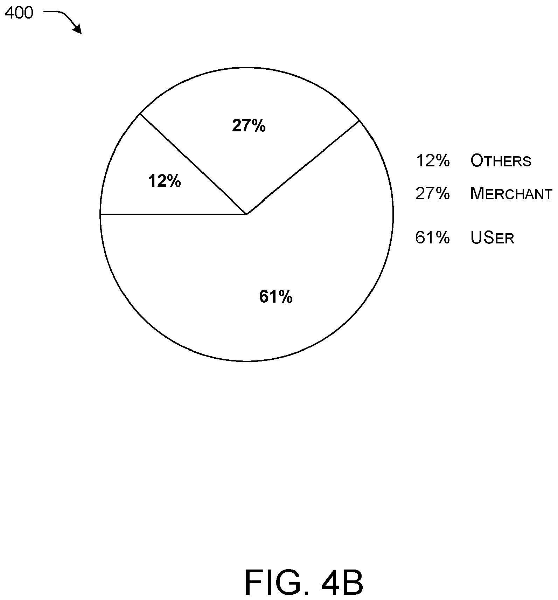

As illustrated in FIG. 4B, clustering may be performed using a K-means technique and the number of clusters may be finalized using an elbowmethod. Hence, a customer segment map of each customer with lesser sparse data and the re-order rate of each product for each customer segment may be calculated. Also, most of the customers ordering large quantities may belong to a merchant cluster and hence, their re-order rate and recommended quantities may be different.

In an exemplary embodiment, popularity, seasonality and trends may be utilized in calculating the customer reorder rate. Trends may be either hyperlocal trend (trending in surrounding region) or may be any other seasonality factor. Consider an example, consumption of dry fruits may drastically increase in comparison to normal re-order rate and quantity. Each of their customers may buy them and hence, the merchant is required to have enough stock of those categories to fulfil their customer needs. So, there may be a seasonality_score_factor for each category to scale the probabilities of transaction of that category depending upon time and place. Calculation of the seasonality_score_factor may be estimated from any other parallel model for each category.

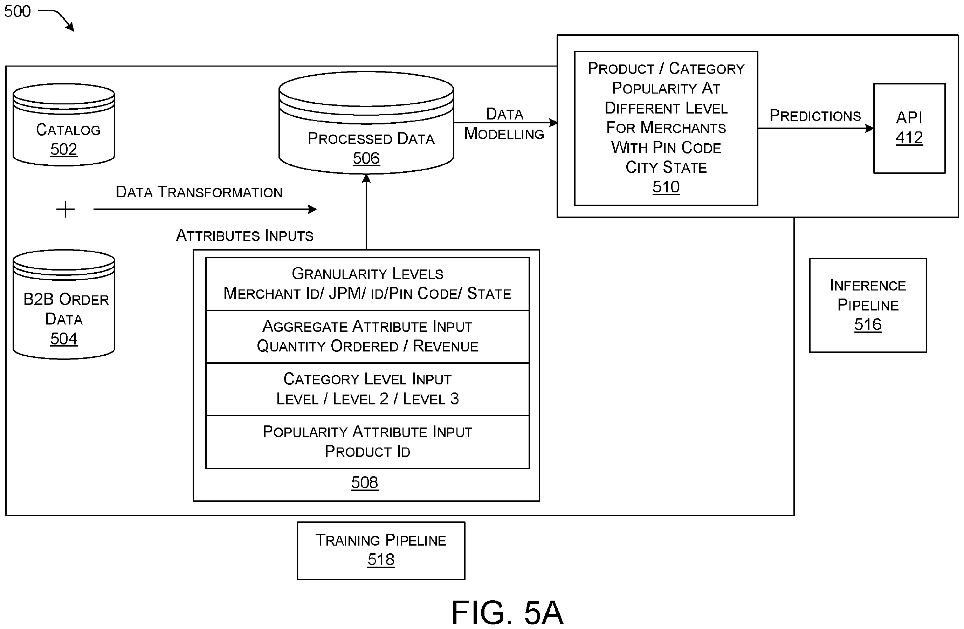

FIGs. 5A-5E illustrates an exemplary representation (500) of a result analysis, in accordance with an embodiment of the present disclosure.

As illustrated in FIG. 5A, a training pipeline (516) may include a catalog data module (502), and a B2B order data module (504) where input data from the catalog data module (502) and the B2B order data module (504) may be provided to a processed data module (506) after data transformation. Further, attributes inputs (508) may be provided to the pre-processed data module (506). The attributes inputs (508) may include granularity levels (merchant identification (ID), personal identification number (PIN code), state). Further, attributes inputs (508) may include an aggregate attribute input (quantity ordered/revenue), a category level input (level1/level 2/level 3), and a popularity attribute input (product ID). The processed data module (506) may utilize data modelling to generate a product /category popularity (510) for different level merchants with the associated PIN code, city, and state. Further, an application programming interface (API) (512) associated with the AI engine (212) may predict future product /category popularity for different level merchants and provide the generated product /category popularity for different level merchants to an inference pipeline (514).

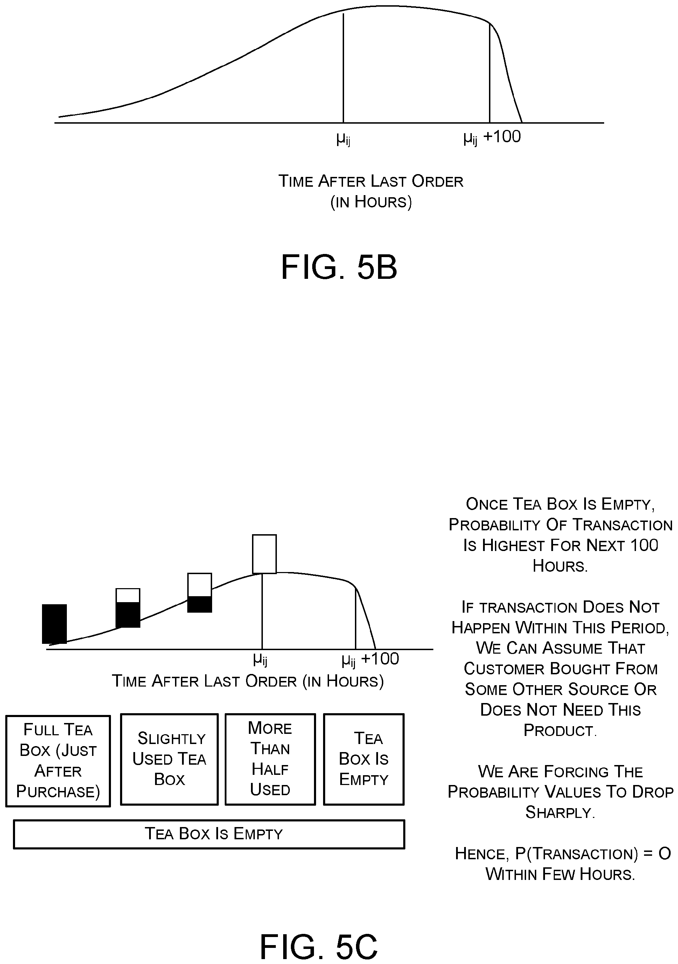

As illustrated in FIG. 5B, statistical data calculating the probability of products ordered by the users (108)/customers is depicted.

In an exemplary embodiment, the system (110) may predict the probability of products to be bought on any day by the customer/user (108), vendor/merchant. In an exemplary implementation, the ordering behaviour of customer was observed to deduce that even after whole consumption, the customer may generally order within a period of 3-4 days. This may incorporated by doubling the standard deviation as shown.

If (current_day-last_transaction_date) $> \mu_{ij}$:

$$P\left(transaction/category_i, date, customer_j\right) \sim N(\mu_{ij}, \sigma_{ij}\text{^}2)$$

Else if (current_day-last_transaction_date) $> \mu_{ij} + 100$:

$$P\left(transaction/category_i, date, customer_j\right) \sim mx + c$$

Else:

$$P\left(transaction/category_i, date, customer_j\right) \sim c * N(\mu_{ij}, 4 * \sigma_{ij}\text{^}2)$$

Here, $\sigma_{ij}$ has been doubled after the mean to incorporate the customer/merchant ordering behaviour where a capacitance (C) may be a constant function used to make the function continuous. As capacitance may be based on a consumption rate or decay rate (also referred to as capacitance herein) where in a way of example and not as a limitation, the capacitance may be obtained by decreasing the decay rate for next 100 hours and may observe a sudden drop with very high negative within the next few hours.

As illustrated in FIG. 5C, segmentation was employed for estimation over order data and product catalogue data using multiple distribution functions like Normal, Poisson, log-normal etc. However, the following issues were observed.

    a. Most of the customers had ordered few specific items only and hence, the input data was very sparse.
    b. Also, many customers were ordering very large quantities of products whose behaviour can be treated as outlier.

Both of these problems may be solved using customer/merchant segmentation based on their ordering pattern. Each of the customer/ merchant was represented as a vector of re-order rate of each segment (product lowest level category) as described in FIG. 3 of the current disclosure.

In an exemplary embodiment, brand affinity associated with the one or more product data (102) may be calculated as shown.

$$brand\ affinity_{(user=u,\ category=c,\ brand=b)} =$$

$$\int_{order=i}^{N} order_{quantity\ ordered} * X$$

$$X = \begin{cases} 1\ if\ (order_{user} == u)\ and\ (order_{category} == c)\ and\ (o_{brand} == b) \\ 0\ otherwise \end{cases}$$

$$normalized\ brand\ affinity_{(user=u,\ category=c,\ brand=b)} =$$

$$\frac{brand\ affinity_{(user=u,\ category=c,\ brand=b)} - min\_brand\_affinity_{(user=u,\ category=c)}}{max\_brand\_affinity_{(user=u,\ category=c)} - min\_brand\_affinity_{(user=u,\ category=c)}}$$

In an exemplary implementation, the Filter brands may be based on

$$brands\ [\ brands\ [affinity\ score] > K\ (threshold)],$$

and

$$brands\ [\ brands\ [affinity\ score] > (mean\ affinity\ score + 1*standard\_deviation)$$

In an exemplary embodiment, a frequency based logic may be applied to compute different kinds of user affinity such as category affinity, discount affinity, and the like.

In an exemplary implementation, a popularity score can be given by

$$popularity\_score_{(user=u,\ category=c,\ product=p)} = \alpha * QTY_t + (1 - \alpha) * popularity\_score_{t-1}$$

Smoothing Factor: $\alpha = \dfrac{2}{(n+1)}$

$$For\ 7 - day\ EMA\ \alpha\ =\ \frac{2}{(7+1)} = 0.25$$

$$normalized\ popularity\ score\ _{(user=u,\ category=c,\ product=p)} =$$

$$\frac{popularity\ score\ _{(user=u,\ category=c,\ product=p)} - min\_popularity\_score\ _{(user=u,\ category=c)}}{max\_popularity\_score\ _{(user=u,\ category=c)} - min\_popularity\_score\ _{(user=u,\ category=c)}}$$

Filter category may be based on

$$category\ [\ category\ [popularity\ score] > K\ (threshold)],$$

and

$$category\ [\ category\ [popularity\ score] > (mean\ category\ score +$$

$$1*standard\_deviation)$$

In an exemplary embodiment, a frequency-based logic can be applied to compute different kinds of popularity such as category popularity, brand popularity, PINCODE popularity.

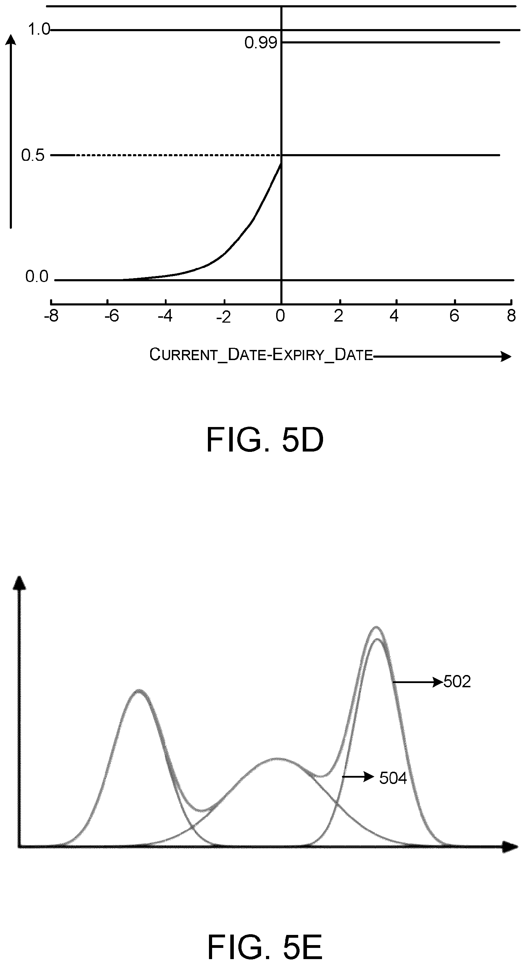

In an exemplary embodiment, shelf life of products may be a factor which will affect the probability of transaction of customers. If a product is expired, a customer may have to restore the stock of that product with quantity (based on their consumption) as the current products in stock may have expired. Hence, there will be factor of shelf life should be included in the equation to predict the final probability of transaction. Hence, shelf life factor may be a step function or may be a smoothened function before expiry as illustrated in FIG. 5D.

$$Shelf\_life\_factor\_transaction\_probability(x_i) = \begin{cases} sigmoid(x_i), x < 0, \\ 0.99, x \geq 0 \end{cases}$$

Where $(x_i)$ = (current_date - expiry_date) for category i.
Hence, the final probability of transaction may be

$$P\left(\frac{transaction}{category_i}, date, customer_i\right)$$

$$= max(Shelf_{life_{factor_{transaction_{probabilty}}}}, N(\mu_{ik}, \sigma_{ik}^2))$$

Above function denotes that:

- If shelf life is over even if the customer have not consumed, customer will transact.
- If shelf life factor is not considerable then, re-order rate will entirely dependent upon the consumption rate of the customer.

In an exemplary implementation, most of the customers who were ordering large quantities belonged to a merchant cluster and hence, their re-order rate and recommended quantities may be different, termed as "Big Family" and "Small Family."

In an exemplary embodiment, trends may be categorized as either a hyperlocal trend (trending in surrounding region) or can be any other seasonality factor. Consider an example, consumption of dry fruits can drastically increase in comparison to normal re-order rate and quantity. Each of their customers will buy them and hence, the merchant should have enough stock of those categories to fulfil their customer needs. So, there should *seasonality_score_factor* for each category to scale the probabilities of transaction of that category depending upon time and place. Calculation of *seasonality_score_factor* will be estimated from any other parallel model for each category. Brand affinity can be

given by

$$brand\ affinity_{(user=u,\ category=c,\ brand=b)} =$$

$$\int_{order=i}^{N} order_{quantity\ ordered} * X$$

$$X =$$

$$\begin{cases} 1\ if\ (order_{user} == u)\ and\ (order_{category} == c)\ and\ (o_{brand} == b) \\ 0\ otherwise \end{cases}$$

$$normalized\ brand\ affinity_{(user=u,\ category=c,\ brand=b)} =$$

$$\frac{brand\ affinity_{(user=u,\ category=c,\ brand=b)} - min\_brand\_affinity_{(user=u,\ category=c)}}{max\_brand\_affinity_{(user=u,\ category=c)} - min\_brand\_affinity_{(user=u,\ category=c)}}$$

In an exemplary implementation, the Filter brands can be based on

○ brands [ brands [affinity score] > K (threshold)] , and

brands [ brands [affinity score] > (mean affinity score +

○ 1*standard_deviation)

In an exemplary embodiment, a frequency based logic can be applied to compute different kinds of user affinity such as category affinity, discount affinity and the like.

In an exemplary implementation, a popularity score can be given by

$$popularity\_score_{(user=u,\ category=c,\ product=p)} = \alpha * QTY_t + (1 - \alpha) * popularity\_score_{t-1}$$

Smoothing Factor: $\quad \alpha = \dfrac{2}{(n+1)}$

$$For\ 7 - day\ EMA\ \alpha = \frac{2}{(7+1)} = 0.25$$

$$normalized\ popularity\ score_{(user=u,\ category=c,\ product=p)} =$$

$$\frac{popularity\ score_{(user=u,\ category=c,\ product=p)} - min\_popularity\_score_{(user=u,\ category=c)}}{max\_popularity\_score_{(user=u,\ category=c)} - min\_popularity\_score_{(user=u,\ category=c)}}$$

Filter category based on

• category [ category [*popularity score*] > K (threshold)] , and

category [ category [*popularity score*] > (mean category score +

• 1*standard_deviation)

In an exemplary implementation, shelf life of products is another factor which will affect the probability of transaction of customers. If a product is expired, a customer will have to restore the stock of that product with quantity (based on their consumption) as the current products in stock are expired. Hence, there will be factor of shelf life should be included in the equation to predict the final probability of transaction. Now, shelf life factor can be step function or can be smoothened function just till date before expiry.

$$Shelf\_life\_factor\_transaction\_probability(x_i) = \begin{cases} sigmoid(x_i), x < 0, \\ 0.99, x \geq 0 \end{cases}$$

Where $(x_i)$ = (current_date - expiry_date) for category i.
Hence, the final probability of transaction will be

$$P\left(\frac{transaction}{category_i}, date, customer_i\right) =$$

$$max(Shelf_{life_{factor_{transaction_{probabilty}}}}, N(\mu_{ik}, \sigma_{ik}^2))$$

Above function may denote that:

- If shelf life is over even if the customer have not consumed, customer will transact.
- If shelf life factor is not considerable then, re-order rate will entirely dependent upon the consumption rate of the customer.

In an exemplary implementation, a Look-Ahead Re-order may be implemented with the system (110) and may be very important for merchants as compared to customers. Customers may manage without some stock-out items and may order later but merchants may lose customers based on the non-availability of stock-out items. For example, if a customer's grocery item such as sugar has completely depleted, he/she can manage without the grocery item 2 or 3 days but a merchant may not be able to replenish the depleted stock of grocery items based due to a very high demand. Merchants generally place orders based on the requirements provided by their customers. A local shopkeeper/ reseller/merchant may have fixed number of customers buying goods from them. So, the merchant may have an idea of each product and their quantity that can be potentially bought by their customers in a few days (before their next transaction). Hence, a merchant's consumption rate may be represented as the consumption rate of their individual customers.

$$Consumption(M_i) = \sum consumption(all\_customers)$$

Finally, the merchant/ vendor consumption may be represented as sum of a plurality of Gaussians which may be represented as another Gaussian as illustrated in FIG. 5E. Merchants may have a distribution function of their transaction which may align with the above consumption equation.

■ As illustrated in FIG. 5E, (504) may represent re-order rate Gaussian of individual customers and (502) may represent the reorder rate of a merchant in that pin-code (This may be generated using B2C data).
■ Merchants may have their re-order rate Gaussian function which may be generated from B2B data and may align with model generated using B2C data.

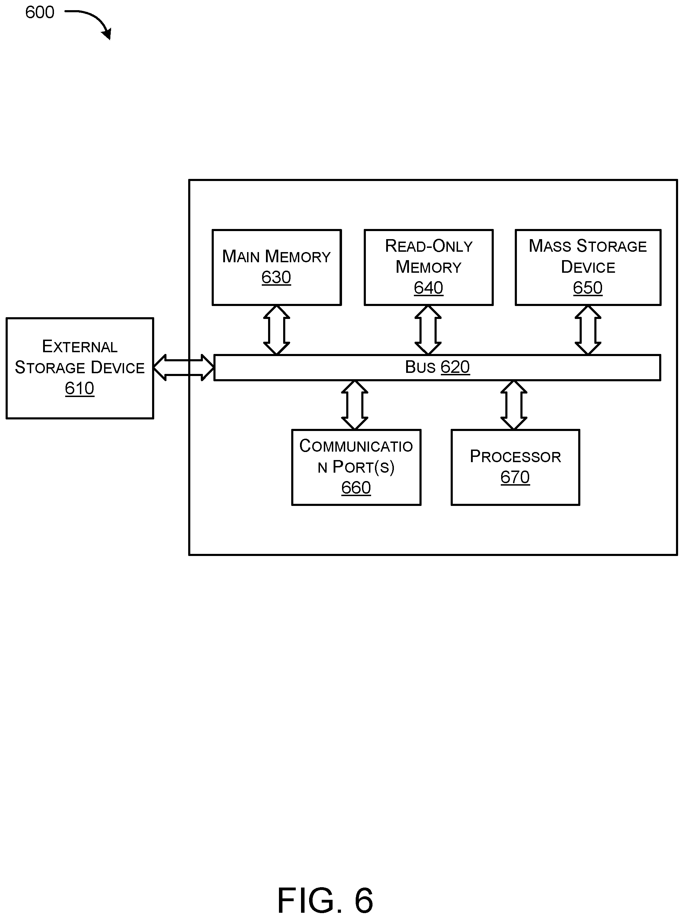

FIG. 6 illustrates an exemplary computer system (600) in which or with which the proposed system may be implemented, in accordance with an embodiment of the present disclosure.
As shown in FIG. 6, the computer system (600) may include an external storage device (610), a bus (620), a main memory (630), a read-only memory (640), a mass storage device (650), a communication port(s) (660), and a processor (670). A person skilled in the art will appreciate that the computer system (600) may include more than one processor and communication ports. The processor (670) may include various modules associated with embodiments of the present disclosure. The communication port(s) (660) may be any of an RS-232 port for use with a modem-based dialup connection, a 10/100 Ethernet port, a Gigabit or 10 Gigabit port using copper or fiber, a serial port, a parallel port, or other existing or future ports. The communication ports(s) (660) may be chosen depending on a network, such as a Local Area Network (LAN), Wide Area Network (WAN), or any network to which the computer system (600) connects.

In an embodiment, the main memory (630) may be Random Access Memory (RAM), or any other dynamic storage device commonly known in the art. The read-only memory (640) may be any static storage device(s) e.g., but not limited to, a Programmable Read Only Memory (PROM) chip for storing static information e.g., start-up or basic input/output system (BIOS) instructions for the processor (670). The mass storage device (650) may be any current or future mass storage solution, which can be used to store information and/or instructions. Exemplary mass storage solutions include, but are not limited to, Parallel Advanced Technology Attachment (PATA) or Serial Advanced Technology Attachment (SATA) hard disk drives or solid-state drives (internal or external, e.g., having Universal Serial Bus (USB) and/or Firewire interfaces).

In an embodiment, the bus (620) may communicatively couple the processor(s) (670) with the other memory, storage, and communication blocks. The bus (620) may be, e.g. a Peripheral Component Interconnect PCI) / PCI Extended (PCI-X) bus, Small Computer System Interface (SCSI), USB, or the like, for connecting expansion cards, drives, and other subsystems as well as other buses, such a front side bus (FSB), which connects the processor (670) to the computer system (600).

In another embodiment, operator and administrative interfaces, e.g., a display, keyboard, and cursor control device may also be coupled to the bus (620) to support direct operator interaction with the computer system (600). Other operator and administrative interfaces can be provided through network connections connected through the communication port(s) (660). Components described above are meant only to exemplify various possibilities. In no way should the aforementioned exemplary computer system (600) limit the scope of the present disclosure.

While considerable emphasis has been placed herein on the preferred embodiments, it will be appreciated that many embodiments can be made and that many changes can be made in the preferred embodiments without departing from the principles of the disclosure. These and other changes in the preferred embodiments of the disclosure will be apparent to those skilled in the art from the disclosure herein, whereby it is to be distinctly understood that the foregoing descriptive matter is to be implemented merely as illustrative of the disclosure and not as a limitation.

## ADVANTAGES OF THE INVENTION

The present disclosure provides a system and a method for estimating the re-order/consumption rate of each product for each vendor/customer and generating a quantity optimization for loss reduction.

The present disclosure provides a system and a method for prescribing the vendor/customer to purchase optimal number of products for each category to minimize loss and wastage of products.

The present disclosure provides a system and a method for estimating a Look-Ahead-Opportunity (difference of actual quantity and expected quantity at any day for a product) for each vendor/customer.

The present disclosure provides a system and a method for providing recommendations to vendors/customers for refilling general inventory.

The present disclosure provides a system and a method for estimating over order data using segmentation based approach.

The present disclosure provides a system and a method for recommending re-order/ consumption rate based on a product reorder rate, product affinity, and a product popularity score.

**Claims**

1. A system (110) for consumption estimation, the system (110) comprising:

   a processor (202); and
   a memory (204) coupled to the processor (202), wherein the memory (204) comprises processor-executable instructions, which on execution, cause the processor (202) to:

      receive one or more product data (102) from one or more computing devices (104), wherein the one or more computing devices (104) are operated by one or more users (108) and are connected to the processor (202) via a network (106);
      compute an aggregated product consumption data based on the received one or more product data (102);
      compute a reorder estimation and an optimal quantity estimation for the received one or more product data (102) based on the computed aggregated product consumption data;
      recommend, using an artificial intelligence (AI) engine (112), a product stock out data to the one or more users (108) based on the reorder estimation and the optimal quantity estimation; and
      generate the consumption estimation for the one or more users (108) based on the recommendation.

2. The system (110) as claimed in claim 1, wherein the aggregated product consumption data comprises at least one of: a product shelf life data, a user segmentation data, a user brand affinity data, and a product popularity data.

3. The system (110) as claimed in claim 1, wherein the one or more product data (102) comprises at least one of: a user order data, and a product catalog data.

4. The system (110) as claimed in claim 2, wherein the processor (202) is configured to generate the user segmentation data based on a computation of one or more user clusters and an associated user reorder rate from the received one or more product data (102).

5. The system (110) as claimed in claim 2, wherein the processor (202) is configured to utilize the received one or more product data (102) and an associated attribute input to compute the product popularity data.

6. The system (110) as claimed in claim 5, wherein the associated attribute input comprises at least one of: a user address, an ordered quantity, a category level, and a popularity attribute.

7. The system (110) as claimed in claim 2, wherein the processor (202) is configured to generate the user brand affinity data based on a computation of a frequency based logic of one or more parameters.

8. The system (110) as claimed in claim 7, wherein the one or more parameters comprise at least one of: a user, a brand, and a category associated with the received one or more product data (102).

9. The system (110) as claimed in claim 2, wherein the processor (202) is configured to generate the product shelf life data based on a transaction probability function associated with the received one or more product data (102).

10. The system (110) as claimed in claim 2, wherein the processor (202) is configured to generate a look ahead reorder based on the user segmentation data and the user brand affinity data.

11. A method for consumption estimation, the method comprising:

   receiving, by a processor (202), one or more product data (102) from one or more computing devices (104), wherein the one or more computing devices (104) are operated by one or more users (108) and are connected to the processor (202) via a network (106);
   computing by the processor (202), an aggregated product consumption data based on the received one or more product data (102);
   computing by the processor (202), a reorder estimation and an optimal quantity estimation for the received one or more product data (102) based on the computed aggregated product consumption data;
   recommending, by the processor (202), using an artificial intelligence (AI) engine (112), a product stock out data to the one or more users (108) based on the reorder estimation and the optimal quantity estimation; and
   generating, by the processor (220), the consumption estimation for the one or more users (108) based on the recommendation.

12. The method as claimed in claim 11, wherein the aggregated product consumption data comprises at least one of: a product shelf life data, a user segmentation data, a user brand affinity data, and a product popularity data.

13. The method as claimed in claim 11, wherein the one or more product data (102) comprises at least one of: a user order data, and a product catalog data.

14. The method as claimed in claim 12, comprising generating, by the processor (202), the user segmentation data based on computing, by the processor (202), one or more user clusters and an associated user reorder rate from the received one or more product data (102).

15. A user equipment (UE) (104) for consumption estimation, the UE (104) comprising:

   one or more processors communicatively coupled to a processor (202) of a system (110), wherein the one or more processors are coupled to a memory, and wherein said memory stores instructions which when executed by the one or more processors cause the UE (104) to:
   transmit one or more product data (102) to the processor (202) via a network (106), wherein one or more users (108) operate the UE (104),
wherein the processor (202) is configured to:

receive the one or more product data (102) from the UE (104);
compute an aggregated product consumption data based on the received one or more product data (102);
compute a reorder estimation and an optimal quantity estimation for the received one or more product data (102) based on the computed aggregated product consumption data;
recommend, using an artificial intelligence (AI) engine (112), a product stock out data to the one or more users (108) based on the reorder estimation and the optimal quantity estimation; and
generate the consumption estimation for the one or more users (108) based on the recommendation.

100

SYSTEM
110

AI ENGINE
112

NETWORK
106

104

COMPUTING
DEVICE 1
104-1

COMPUTING
DEVICE 2
104-2

COMPUTING
DEVICE N
104-N

. . .

102

PRODUCT
102-1

PRODUCT
102-2

. . .

PRODUCT
102-N

108

USER 1
108-1

USER 2
108-2

USER N
108-N

FIG. 1

200

PROCESSING UNIT
108

| PROCESSOR(S) 202 | MEMORY 204 | INTERFACE(S) 206 |

PROCESSING ENGINE
208

| ACQUISITION ENGINE 210 | AI ENGINE 212 |

DATABASE
214

# FIG. 2

300 ⟶

```
                    ┌─────────────────────┐
                    │   SHELF LIFE DATA   │
                    │        306          │
                    └─────────────────────┘
┌──────────────┐
│   CATALOG    │    ┌─────────────────────┐     ┌──────────────────────────────┐
│    DATA      │    │ MERCHANT SEGMENTATION│    │ RE-ORDER RATE ESTIMATION OF EACH│
│     302      │    │(BASED ON RE-ORDER RATE)│  │ PRODUCT FOR EACH MERCHANT GROUP │
└──────────────┘    │   SMALL MERCHANTS   │    │              314              │
                    │  AVERAGE MERCHANTS  │     └──────────────────────────────┘
                    │    BIG MERCHANTS    │
┌──────────────┐    │        308          │
│  B2B ORDER   │    └─────────────────────┘
│    DATA      │
│     304      │    ┌─────────────────────┐
└──────────────┘    │ MERCHANT BRAND AFFINITY│
                    │        310          │
                    └─────────────────────┘
```

SHELF LIFE DATA
306

CATALOG DATA
302

MERCHANT SEGMENTATION (BASED ON RE-ORDER RATE) SMALL MERCHANTS AVERAGE MERCHANTS BIG MERCHANTS
308

RE-ORDER RATE ESTIMATION OF EACH PRODUCT FOR EACH MERCHANT GROUP
314

B2B ORDER DATA
304

MERCHANT BRAND AFFINITY
310

PRODUCT REGIONAL POPULARITY
312

ESTIMATING THE OPTIMAL QUANTITY AND LIST OF PRODUCTS AT MERCHANT LEVEL
316

RECOMMENDATION TO MERCHANT 318

FEEDBACK LOOP

MERCHANT FEEDBACK (CLICK/ORDER/IGNORE)

MERCHANT
320

THIS FEEDBACK LOOP WILL INSURE THAT OUR MODELS ARE CONTINUOUSLY LEARNING FROM MERCHANT'S FEEDBACK FOR A RECOMMENDATION

W1, W2, W3 ARE LEARNABLE PARAMETER WHICH INDICATES IMPORTANCE OF DIFFERENT FEATURES AND CAN BE LEARNED USING THIS FEEDBACK LOOP

FIG. 3

400

```
┌──────────────┐
│ CATALOG DATA │
│     402      │
└──────────────┘
       +                DATA PROCESSING
┌──────────────┐
│  B2C ORDER   │
│    DATA      │
│    404       │
└──────────────┘
```

**CALCULATE AVERAGE RE-ORDER RATE OF EACH CATEGORY FOR EACH CUSTOMER 406**

VECTORIZATION →

**CUSTOMER VECTOR REPRESENTATION [22.7,34.6,67.44, 19.34.............] 408**

CLUSTERING →

**SMALL FAMILY LARGE FAMILY MERCHANTS 410**

EACH INDEX ELEMENT IS RE-ORDER RATE L3 CATEGORY FOR HAS THE CUSTOMER 412

THREE CLUSTERS HAVING COMPLETELY DIFFERENCE RE-ORDER TIME PATTERN 414

CUSTOMER SEGMENTATION PROCESS PIPELINE 416

FIG. 4A

400

27%

12%

61%

12%    OTHERS

27%    MERCHANT

61%    USER

FIG. 4B

FIG. 5A

EP 4 231 212 A1

μ_ij          μ_ij +100

TIME AFTER LAST ORDER
(IN HOURS)

# FIG. 5B

ONCE TEA BOX IS EMPTY,
PROBABILITY OF TRANSACTION
IS HIGHEST FOR NEXT 100
HOURS.

IF TRANSACTION DOES NOT
HAPPEN WITHIN THIS PERIOD,
WE CAN ASSUME THAT
CUSTOMER BOUGHT FROM
SOME OTHER SOURCE OR
DOES NOT NEED THIS
PRODUCT.

WE ARE FORCING THE
PROBABILITY VALUES TO DROP
SHARPLY.

HENCE, P(TRANSACTION) = O
WITHIN FEW HOURS.

μ_ij          μ_ij +100

TIME AFTER LAST ORDER (IN HOURS)

| FULL TEA BOX (JUST AFTER PURCHASE) | SLIGHTLY USED TEA BOX | MORE THAN HALF USED | TEA BOX IS EMPTY |
|---|---|---|---|

| TEA BOX IS EMPTY |
|---|

# FIG. 5C

FIG. 5D

FIG. 5E

600

EXTERNAL
STORAGE DEVICE
610

MAIN MEMORY
630

READ-ONLY
MEMORY
640

MASS STORAGE
DEVICE
650

BUS 620

COMMUNICATIO
N PORT(S)
660

PROCESSOR
670

FIG. 6

Europäisches
Patentamt

European
Patent Office

Office européen
des brevets

# EUROPEAN SEARCH REPORT

Application Number

EP 23 15 7763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/390498 A1 (OHLSSON HENRIK [US] ET AL) 16 December 2021 (2021-12-16)<br>* paragraph [0003] *<br>* paragraph [0134] *<br>* paragraph [0016] *<br>* paragraph [0019] *<br>* paragraph [0055] – paragraph [0056] *<br>* paragraph [0053] *<br>* paragraph [0011] *<br>* paragraph [0086] *<br>* paragraph [0088] *<br>* paragraph [0051] *<br>----- | 1-15 | INV.<br>G06Q10/04<br>G06Q10/087 |
| X | CN 113 554 455 A (HANGZHOU PINPIANYI NETWORK TECH CO LTD) 26 October 2021 (2021-10-26)<br>* the whole document *<br>----- | 1-15 | |
| X | CN 113 592 539 A (HANGZHOU PINPIANYI NETWORK TECH CO LTD) 2 November 2021 (2021-11-02)<br>* the whole document *<br>----- | 1-15 | TECHNICAL FIELDS SEARCHED (IPC)<br><br>G06Q |
| X | CN 113 988 929 A (SUZHOU JIXIANFENG TECH CO LTD) 28 January 2022 (2022-01-28)<br>* the whole document *<br>----- | 1-15 | |

The present search report has been drawn up for all claims

| Place of search | Date of completion of the search | Examiner |
|---|---|---|
| The Hague | 28 April 2023 | Papanikolaou, N |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 23 15 7763

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2023

| Patent document cited in search report | | Publication date | Patent family member(s) | Publication date |
|---|---|---|---|---|
| US 2021390498 | A1 | 16-12-2021 | NONE | |
| CN 113554455 | A | 26-10-2021 | NONE | |
| CN 113592539 | A | 02-11-2021 | NONE | |
| CN 113988929 | A | 28-01-2022 | NONE | |

EPO FORM P0459

For more details about this annex : see Official Journal of the European Patent Office, No. 12/82